# EUROPEAN PATENT APPLICATION

(11) **EP 1 646 215 A1**
(43) Date of publication of application: **12.04.2006**
(21) Application number: 05021893.2
(22) Date of filing: 07.10.2005
(51) Int. Cl.: H04M 1/60, H04M 1/03

(54) **Stereo mobile terminal and method for calling using the stereo mobile terminal**

(30) Priority: 08.10.2004 KR 2004080630
(71) Applicant: Samsung Electronics Co., Ltd., Yeongtong-gu Suwon-si, Gyeonggi-do (KR)
(72) Inventor: Lee, Yong-Ju, Yeongtong-gu, Suwon-si, Gyeonggi-do (KR)
(74) Representative: Grünecker, Kinkeldey, Stockmair & Schwanhäusser Anwaltssozietät

(57) **Abstract**

Disclosed is a stereo mobile terminal including an RF section (120) for receiving or transmitting stereo speech data during a voice call; a demultiplexer (130) for demultiplexing the received stereo speech data into a plurality of speech data and outputting the plurality of speech data; an audio codec (150) for converting the plurality of speech data into a plurality of speech signals to output the speech signals to a plurality of speakers (162) and converting a plurality of speech signals inputted from a plurality of microphones (171) into a plurality of speech data and outputting the plurality of speech data; a multiplexer (140) for multiplexing the plurality of speech data outputted from the audio codec to output the same as stereo speech data; and a control section (110) for controlling operations of the mobile terminal to perform voice communication with a caller's terminal according to a user's demand.

## Description

The present invention relates to a mobile communication terminal, and more particularly to a mobile terminal having the capability of providing stereo voice calls.

Generally, mobile terminals use monophonic (mono) sound for voice calls, sometimes with video. In mono mode, speech signals are received and transferred in monotone over a single channel. Mobile terminals performing voice calls in mono mode are called "mono mobile terminals".

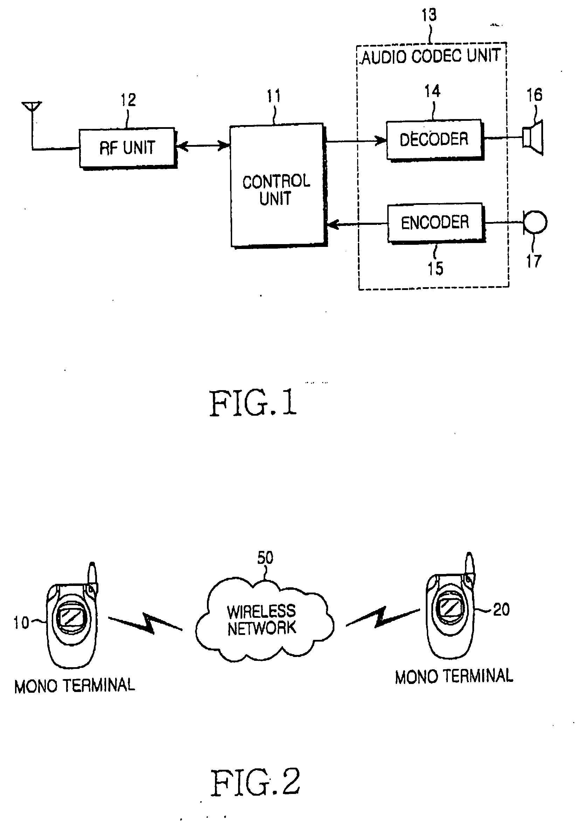

FIG. 1 is a block diagram of a conventional mono terminal that performs control operations for a voice call with a single-channel speech signal in mono mode. During a voice call, a control unit 11 controls overall operations of the mono terminal to output mono speech data received from a caller's terminal as a speech signal, and also converts speech signals input through a microphone 17 into mono speech data to be sent to the caller's terminal. An RF unit 12 receives and transmits mono speech data under the control of the control unit 11. An audio codec 13, including a decoder 14 and an encoder 15, processes speech signals and converts mono speech data received through the RF unit 12 into a speech signal and outputs the speech signal. In addition, the audio codec 13 converts input speech signals into mono speech data and outputs the mono speech data. To be specific, the encoder 15 converts speech signals input through the microphone 17 into mono speech data and outputs the mono speech data to the control unit 11, while the decoder 14 converts mono speech data transferred from the control unit 11 into a speech signal and outputs the speech signal through a speaker 16.

Most conventional mobile terminals were designed to be monophonic, enabling voice calls with less data because of the narrow transmission bandwidths of early wireless networks.

FIG. 2 is a schematic view illustrating a conventional system for voice communication between mono terminals. Referring to FIG. 2, a caller's mono terminal 10 receives and transmits mono speech data from and to a recipient's mono terminal 20 via the wireless network 50 to perform a voice call. Simple voice transfer can be achieved by the transmission of mono speech data and single-channel mono speech signals. However, mono terminals cannot sufficiently transfer vivid stereo speech sounds generated at the place of call.

Accordingly, the present invention has been made to solve the above-mentioned problems occurring in the prior art.

It is the object of the present invention to provide a stereo mobile terminal capable of performing a vivid stereo voice call or video call with a plurality of speech signals and a method for performing a voice call using the stereo mobile terminal.

This object is solved by the subject matter of the independent claims.

Preferred embodiments are defined in the dependent claims.

An aspect of the present invention is to provide a stereo mobile terminal capable of performing a voice call even with a mono mobile terminal and a method for performing a voice call between a stereo mobile terminal and a mono mobile terminal.

In accordance with one aspect of the present invention for accomplishing the above, there is provided a stereo mobile terminal including an RF section for receiving or transmitting stereo speech data during a voice call; a demultiplexer for demultiplexing the received stereo speech data into a plurality of speech data and outputting the plurality of speech data; an audio codec for converting the plurality of speech data into a plurality of speech signals to output the speech signals to a plurality of speakers and converting a plurality of speech signals input from a plurality of microphones into a plurality of speech data and output the plurality of speech data; a multiplexer for multiplexing the plurality of speech data output from the audio codec to output the same as stereo speech data; and a control section for controlling operations of the mobile terminal to perform voice communication with a caller's terminal according to a user's demand.

In accordance with another aspect of the present invention, there is provided a method for performing a voice call between stereo mobile terminals, including when a caller's stereo terminal inputs a demand for a voice call to a recipient's stereo terminal, connecting a voice call to the recipient's stereo terminal; inputting a plurality of speech signals through a plurality of microphones to perform the voice call to the recipient's stereo terminal; converting the input speech signals into a plurality of speech data and multiplexing the plurality of speech data to generate stereo speech data; and sending the generated stereo speech data to the recipient's stereo terminal.

In accordance with still another aspect of the present invention, there is provided a method for performing a voice call to a mono mobile terminal from a stereo mobile terminal, including when the stereo mobile terminal inputs a demand for a voice call to the mono mobile terminal, connecting a voice call to the mono mobile terminal; inputting a plurality of speech signals through a plurality of microphones to perform the voice call to the mono mobile terminal and mixing the speech signals into a single speech signal; and converting the single speech signal into mono speech data and sending the mono speech data to the mono mobile terminal.

In accordance with still another aspect of the present invention, there is provided a method for performing a voice call to a stereo mobile terminal from a mono mobile terminal, including when the mono mobile terminal inputs a demand for a voice call to the stereo mobile terminal, connecting a voice call to the stereo mobile terminal; inputting a speech signal through a single microphone to perform the voice call to the stereo mobile terminal to generate mono speech data; and sending the mono speech data to the stereo mobile terminal to be output as a single speech signal.

The present invention will be more apparent from the following detailed description taken in conjunction with the accompanying drawings, in which:
FIG. 1 is a block diagram of a conventional mono mobile terminal;
FIG. 2 is a schematic view illustrating a conventional system for voice communication between mono mobile terminals;
FIG. 3 is a block diagram of a stereo mobile terminal according to an embodiment of the present invention;
FIG. 4 is a schematic view illustrating a system for voice communication between stereo mobile terminals according to an embodiment of the present invention;
FIG. 5 is a flow chart illustrating a process of performing a voice call between stereo mobile terminals according to an embodiment of the present invention;
FIG. 6 is a schematic view illustrating a system for voice communication between a stereo mobile terminal and a mono mobile terminal according to an embodiment of the present invention;
FIG. 7 is a flow chart showing a process of performing a voice call between a stereo mobile terminal and a mono mobile terminal according to a first embodiment of the present invention;
FIG. 8 is a flow chart showing a process of performing a voice call between a stereo mobile terminal and a mono mobile terminal according to a second embodiment of the present invention; and
FIG. 9 is a flow chart showing a process of performing a voice call between a stereo mobile terminal and a mono mobile terminal according to a third embodiment of the present invention.

Hereinafter, preferred embodiments of the present invention will be described with reference to the accompanying drawings. In the following description of the present invention, a detailed description of known functions and configurations incorporated herein will be omitted when it may make the subject matter of the present invention unclear.

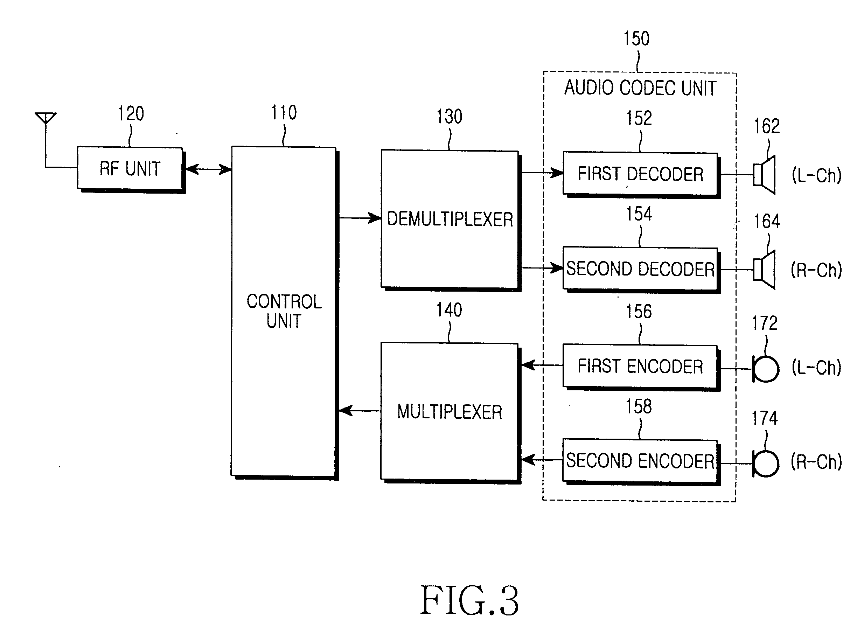

FIG. 3 is a block diagram of a stereo mobile terminal according to the present invention. The stereo mobile terminal includes a control unit 110, an RF unit 120, a demultiplexer 130, a multiplexer 140, an audio codec 150, a first speaker 162, a second speaker 164, a first microphone 172 and a second microphone 174.

The control unit 110 controls operations to perform a stereo voice call using a plurality of speech signals. As used herein, stereo voice call refers to a type of telephone call using a plurality of speech signals with different phases. Under the control of the control unit 110, stereo speech data received from a caller's terminal are output as a plurality of speech signals. Speech signals input through the microphones are converted into stereo speech data to be sent to the caller's terminal. The RF unit 120 receives or transmits stereo speech data under the control of the control unit 110. When stereo speech data multiplexed from a plurality of speech data is received, the demultiplexer 130 demultiplexes the received stereo speech data and outputs same plurality of speech data, which is demultiplexed. When a plurality of speech data are received, the multiplexer 140 multiplexes the received speech data and outputs the single stereo speech data, which is multiplexed.

The audio codec 150 includes a plurality of decoders and encoders for processing a plurality of speech signals. The decoders convert the plurality of speech data output from the demultiplexer 130 into speech signals that will be output through the speakers. The encoders convert speech signals input from the plurality of microphones into a plurality of speech data that will be output to the multiplexer 140.

In preferred embodiments of the present invention, a stereo mobile terminal is capable of performing a voice call using two speech signals (for example, a left-channel speech signal and a right-channel speech signal) . When two (left-channel and right-channel) speech signals are used, a first encoder 156 converts speech signals input from the first microphone 172 into left-channel speech data and outputs the left-channel speech data, while a second encoder 158 converts speech signals input from the second microphone 174 into right-channel speech data and outputs the right-channel speech data.

The first and second microphones 172 and 174 for left and right channels, respectively, can be located at different positions (for example, a left side and a right side) of the stereo mobile terminal. In stereo, speech signals input to the two microphones have different phases. The multiplexer 140 receives left-channel speech data and right-channel speech data from the first encoder 156 and the second encoder 158, respectively. The multiplexer 140 multiplexes the left-channel and right-channel speech data and outputs stereo speech data. The demultiplexer 130 demultiplexes the stereo speech data into left-channel speech data and right-channel speech data to output the two speech data. The first decoder 152 converts the left-channel speech data into a speech signal and outputs it to the first (left-channel) speaker 162. The second decoder 154 converts the right-channel speech data into a speech signal and outputs it to the second (right-channel) speaker 164. The two speakers 162 and 164 for left and right channels, respectively, can be located at different positions (for example, a left side and a right side) of the stereo mobile terminal.

In stereo, speech signals output from the two speakers have slightly different phases. For example, the left-channel speaker 162 has a higher output level for sound produced on the left side. The right-channel speaker 164 has a higher output for sound produced on the right side. The stereo mobile terminal according to an embodiment of the present invention simultaneously outputs two speech signals with different phases through the left and right speakers, thereby transferring vivid and authentic stereo sound.

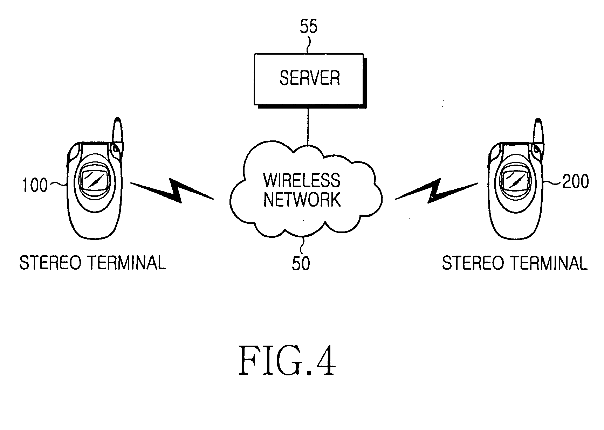

FIG. 4 is a block diagram of a system for voice communication between stereo mobile terminals according to an embodiment of the present invention.

Referring to FIG. 4, the wireless network 50 has a much broader bandwidth than early wireless networks to enable large-volume data transmission. The wireless network 50 transfers stereo speech data from a caller's stereo terminal 100 to a recipient's stereo terminal 200.

A server 55 stores stereo support information of each terminal to indicate whether a terminal is monophonic or stereophonic. When requested, the server 55 provides stereo support information of a pertinent terminal.

When the caller's stereo terminal 100 inputs a demand for a voice call to a specific recipient's terminal, it can receive stereo support information of the recipient's terminal from the server 55 and confirm that the recipient's terminal is stereophonic. Then the stereo terminal 100 generates stereo speech data and sends the stereo speech data to the recipient's terminal. Since the stereo speech data includes data of the plurality of speech signals, it is greater in size than mono speech data for a single speech signal.

The recipient's stereo terminal 200 receives stereo speech data from the caller's stereo terminal 100 through the wireless network 50 and outputs a plurality of speech signals corresponding to the received stereo speech data through the plurality of speakers.

Hereinafter, a process of performing a voice call between the caller's stereo terminal 100 and the recipient's stereo terminal 200 will be explained in more detail.

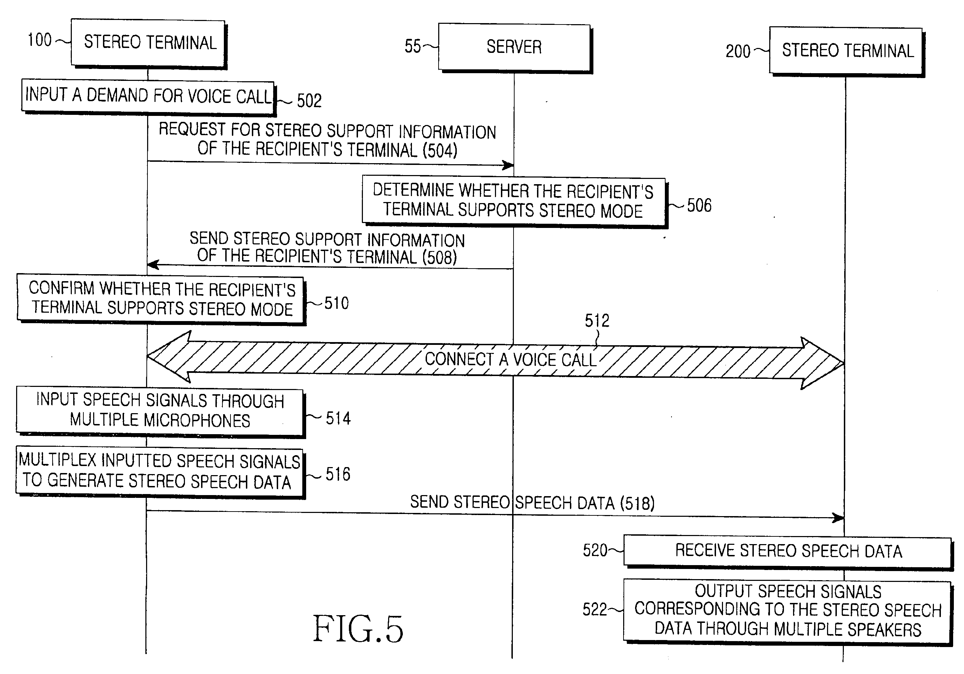

FIG. 5 is a flow chart showing the process of performing a voice call between two stereo mobile terminals according to an embodiment of the present invention. Referring to FIGs. 4 and 5, the caller having the stereo terminal 100 can input a demand for a voice call to a specific recipient's terminal at step 502. Then the stereo terminal 100 sends a request for stereo support information of the recipient's terminal to the server 55 through the wireless network 50 at step 504. The server 55 determines whether the recipient's terminal support a stereo mode at step 506 and sends the stereo support information of the recipient's terminal to the caller's stereo terminal 100 at step 508. The stereo terminal 100 receives the stereo support information from the server 55 and confirms that the recipient's terminal is stereophonic at step 510. The caller's stereo terminal 100 connects a voice call to the recipient's stereo terminal 200 at step 512.

When the voice call to the recipient's stereo terminal 200 is connected, the caller using the stereo terminal 100 inputs speech signals through the plurality of microphones in step 514. At step 516, the stereo terminal 100 converts the input speech signals into its respective speech data and multiplexes the multiple speech data to generate single stereo speech data. At step 518, the caller's stereo terminal 100 sends the stereo speech data to the recipient's stereo terminal 200 via the wireless network 50.

At step 520, the recipient's stereo terminal 200 receives the stereo speech data from the caller's stereo terminal 100. At step 522, the recipient's stereo terminal 200 outputs a plurality of speech signals corresponding to the received stereo speech data through the plurality of speakers. In further detail, the recipient's stereo terminal 200 demultiplexes the received stereo speech data into a plurality of speech data and converts the plurality of speech data into corresponding speech signal or sound. The speech signals are then output through the respective speakers.

As compared to a voice call between mono mobile terminals, a voice call between stereo mobile terminals using a plurality of speech signals can transfer more vivid and authentic sound.

Since mono mobile terminals process mono speech data only, the stereo voice call as explained above cannot be performed between a mono mobile terminal and a stereo mobile terminal. The present invention provides a system and method for performing a voice call between a stereo mobile terminal and a mono mobile terminal, in addition to a system and method for performing a voice call between two stereo mobile terminals.

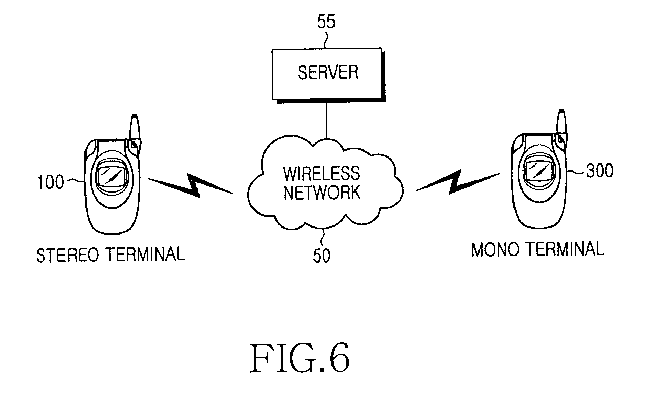

FIG. 6 is a schematic view illustrating a system for voice communication between a stereo mobile terminal and a mono mobile terminal according to the present invention. Referring to FIG. 6, when the caller's stereo terminal 100 inputs a demand for a voice call to a specific recipient's terminal, it can receive stereo support information of the recipient's terminal from the server 55 and confirm that the recipient's terminal is monophonic. The stereo terminal 100 mixes speech data corresponding to a plurality of speech signals to generate mono speech data and sends the mono speech data to the recipient's mono terminal 300. The generated mono speech data has a volume similar to general mono speech data. The recipient's mono terminal 300 receives the mono speech data from the caller's stereo terminal 100 via the wireless network 50 and outputs a speech signal corresponding to the received mono speech data through a single speaker.

Hereinafter, a process of performing a voice call between the stereo mobile terminal 100 and the mono mobile terminal 300 will be explained in more detail. There are at least three embodiments of a voice call between the stereo mobile terminal 100 and the mono mobile terminal 300.

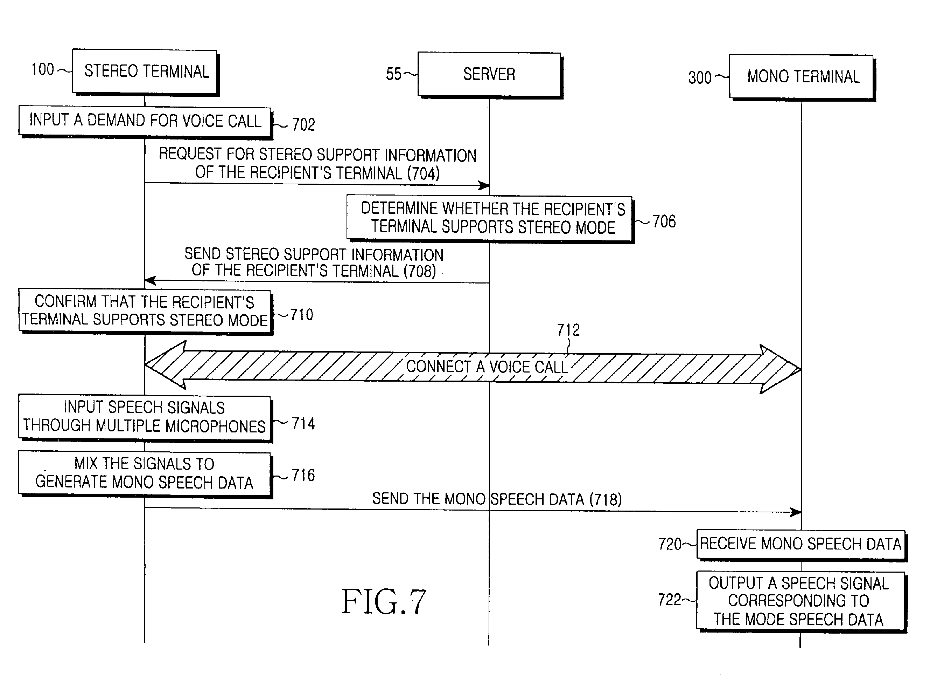

In accordance with the first embodiment, the stereo mobile terminal 100 makes a voice call to the mono mobile terminal 300 using mono speech data. FIG. 7 is a flow chart showing a process of performing a voice call between the stereo mobile terminal 100 and the mono mobile terminal 300 according to the first embodiment. Referring to FIGs. 6 and 7, the caller having the stereo terminal 100 can input a demand for a voice call to a specific recipient's terminal at step 702. The stereo terminal 100 sends a request for stereo support information of the recipient's terminal to the server 55 through the wireless network 50 at step 704.

The server 55 determines whether the recipient's terminal support a stereo mode at step 706 and sends the stereo support information of the recipient's terminal to the caller's stereo terminal 100 at step 708.

The stereo terminal 100 receives the stereo support information from the server 55 and confirms that the recipient's terminal is monophonic at step 710. The caller's stereo terminal 100 connects a voice call to the recipient's mono terminal 300 at step 712.

When the voice call to the recipient's mono terminal 300 is connected, the caller's stereo terminal 100 accepts, as input, speech signals from the caller through the plurality of microphones in step 714. At step 716, the stereo terminal 100 converts the speech signals into their respective speech data and mixes the speech data to generate mono stereo speech data. At step 718, the caller's stereo terminal 100 sends the mono speech data to the recipient's mono terminal 300 via the wireless network 50.

At step 720, the recipient's mono terminal 300 receives the mono speech data from the caller's stereo terminal 100. At step 722, the recipient's mono terminal 300 outputs a single speech signal corresponding to the received mono speech data through a single speaker.

As explained above, the stereo terminal 100 generates mono speech data, instead of stereo speech data, to make a voice call to the mono terminal 300.

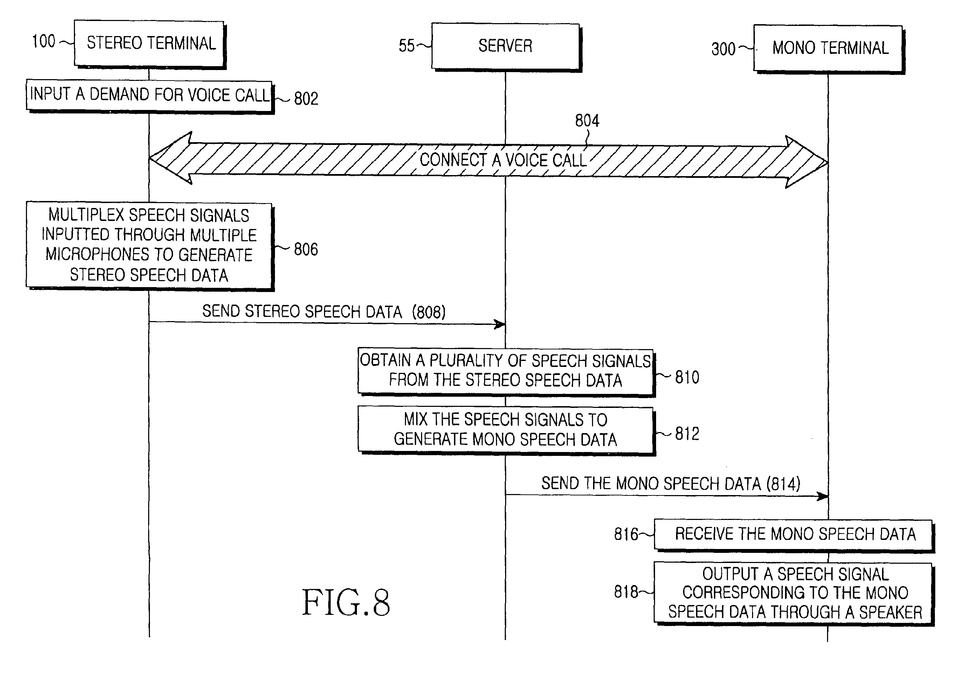

In accordance with the second embodiment, the server 55 converts stereo speech data sent from the stereo terminal 100 into mono speech data to enable a voice call between the stereo terminal 100 and the mono terminal 300. FIG. 8 is a flow chart showing a process of performing a voice call between the stereo terminal 100 and the mono terminal 300 according to the second embodiment.

Referring to FIGs. 6 and 8, the caller having the stereo terminal 100 can input a demand for a voice call to a specific recipient's terminal at step 802. The stereo terminal 100 connects a voice call to the recipient's mono terminal 300 at step 804.

When the voice call to the recipient's mono terminal 300 is connected, the caller's stereo terminal 100 proceeds with step 806 to convert speech signals input through the plurality of microphones into respective speech data, and multiplexes the speech data to generate stereo speech data. At step 808, the stereo terminal 100 sends the stereo speech data to the server 55 via the wireless network 50.

At step 810, the server 55 obtains a plurality of speech signals from the stereo speech data received from the stereo terminal 100. To do so, the server 55 demultiplexes the stereo speech data to obtain a plurality of speech data, and acquires a plurality of speech signals from the speech data through digital-to-analog conversion. At step 812, the server 55 mixes the plurality of speech signals into a single speech signal and generates mono speech data from the speech signal. At step 814, the server 55 sends the mono speech data to the recipient's mono terminal 300.

At step 816, the recipient's mono terminal 300 receives the mono speech data from the server 55. At step 818, the recipient's mono terminal 200 outputs a single speech signal corresponding to the received mono speech data through a single speaker.

In the second embodiment, the server 55 converts stereo speech data sent from the stereo terminal 100 into mono speech data to enable a voice call between the stereo terminal 100 and the mono terminal 300.

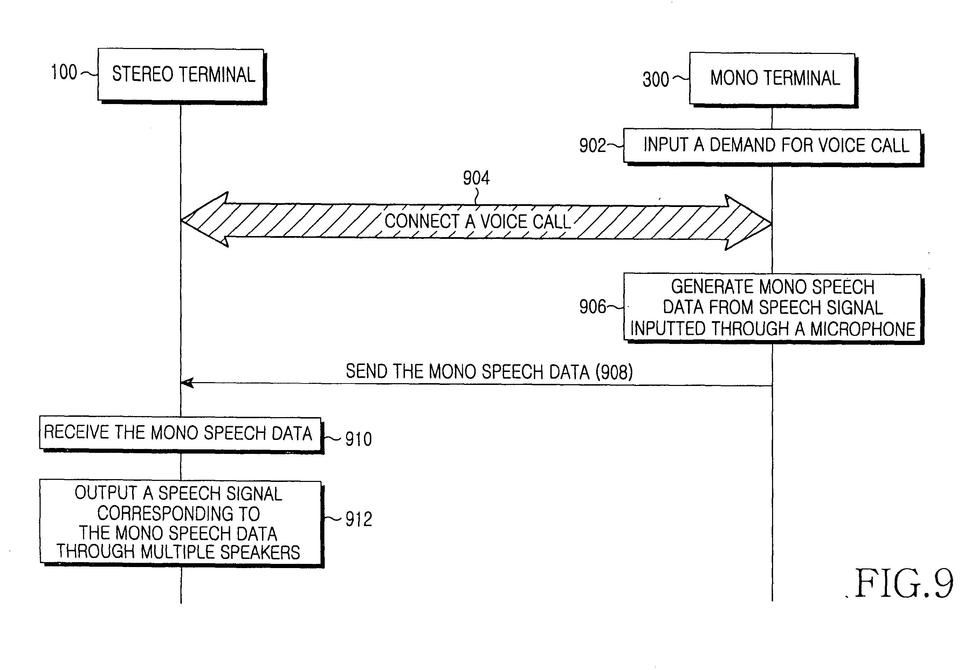

The third embodiment enables a voice call to the stereo terminal 100 from the mono terminal 300. FIG. 9 is a flow chart showing a process of performing a voice call between the stereo terminal 100 and the mono terminal 300 according to the third embodiment.

The process in FIG. 9 is performed when the mono terminal 300 initiates an outgoing call to the stereo terminal 100. Referring to FIGs. 6 and 9, the caller having the mono terminal 300 can input a demand for a voice call to the stereo terminal at step 902. Then the mono terminal 300 connects a voice call to the stereo terminal 100 at step 904.

When the voice call to the recipient's stereo terminal 100 is connected, the mono terminal 300 proceeds with step 906 to generate mono speech data from a single speech signal inputted through a microphone. At step 908, the mono terminal 300 sends the mono speech data to the stereo terminal 100 via the wireless network 50.

At step 910, the stereo terminal 100 receives the mono speech data from the mono terminal 300. At step 912, the stereo terminal 100 outputs a single speech signal corresponding to the received mono speech data through the plurality of speakers.

Although the stereo terminal 100 can convert stereo speech data into mono speech data, it cannot convert mono speech data into stereo speech data. When mono speech data is received, the stereo terminal 100 outputs a single speech signal converted from the mono speech data.

As compared to mono mobile terminals, stereo mobile terminals using a plurality of speech signals during a voice call have superior sound quality and thereby enhance user satisfaction. Furthermore, stereo mobile terminals can improve sound source separation using a plurality of speech signals during a voice call and transfer vivid and authentic stereo speech sounds. The present invention is applicable to a voice call between a stereo mobile terminal and a mono mobile terminal, as well as a voice call between stereo mobile terminals.

Although preferred embodiments of the present invention have been described for illustrative purposes, those skilled in the art will appreciate that various modifications, additions and substitutions are possible, without departing from the scope of the invention as disclosed in the accompanying claims.

## Claims

1. A stereo mobile terminal comprising:
an RF section for receiving or transmitting stereo speech data during a voice call;
a demultiplexer for demultiplexing received stereo speech data into a plurality of speech data and outputting the plurality of speech data;
an audio codec for converting the plurality of speech data into a plurality of speech signals to output the speech signals to a plurality of speakers and for converting a plurality of speech signals input from a plurality of microphones into a plurality of speech data and for outputting the plurality of speech data;
a multiplexer for multiplexing the plurality of speech data outputted from the audio codec to output the same as stereo speech data.

2. The stereo mobile terminal as claimed in claim 1, further comprising a control section for controlling operations of the mobile terminal to perform voice communication with a caller's terminal according to a user's demand.

3. The stereo mobile terminal as claimed in claim 1 or 2, wherein said plurality of speech data include left-channel speech data and right-channel speech data.

4. The stereo mobile terminal as claimed in claim 3, wherein said audio codec includes:
a decoder for converting the left-channel speech data and the right-channel speech data into a left-channel speech signal and a right-channel speech signal, respectively, and outputting the left-channel speech signal through a first speaker and the right-channel speech signal through a second speaker; and
an encoder for receiving a left-channel speech signal from a first microphone and a right-channel speech signal from a second microphone, for converting the received left-channel and right-channel speech signals into left-channel and right-channel speech data, and for outputting the left-channel and right-channel speech data.

5. A method for performing a voice call between stereo mobile terminals, comprising:
when a caller's stereo terminal inputs a demand for a voice call to a recipient's stereo terminal, connecting a voice call to the recipient's stereo terminal;
inputting a plurality of speech signals through a plurality of microphones to perform the voice call to the recipient's stereo terminal;
converting the inputted speech signals into a plurality of speech data and multiplexing the plurality of speech data to generate stereo speech data; and
sending the generated stereo speech data to the recipient's stereo terminal.

6. The method as claimed in claim 5, wherein said caller's stereo terminal receives stereo support information of the recipient's terminal from an external server and confirms that the recipient's terminal is stereophonic based on the stereo support information.

7. A method for performing a voice call to a mono mobile terminal from a stereo mobile terminal, comprising:
connecting a voice call to the mono mobile terminal when the stereo mobile terminal inputs a demand for a voice call to the mono mobile terminal;
inputting a plurality of speech signals through a plurality of microphones to perform the voice call to the mono mobile terminal and mixing the speech signals into a single speech signal; and
converting the single speech signal into mono speech data and sending the mono speech data to the mono mobile terminal.

8. The method as claimed in claim 7, wherein said stereo mobile terminal receives stereo support information of the recipient's terminal from an external server and confirms that the recipient's terminal is monophonic based on the stereo support information.

9. A method for performing a voice call to a stereo mobile terminal from a mono mobile terminal, comprising the steps of:
connecting a voice call to the stereo mobile terminal when the mono mobile terminal inputs a demand for a voice call to the stereo mobile terminal;
inputting a speech signal through a single microphone to perform the voice call to the stereo mobile terminal to generate mono speech data; and
sending the mono speech data to the stereo mobile terminal to be outputted as a single speech signal.

10. The method as claimed in claim 9, wherein said stereo mobile terminal outputs a single speech signal corresponding to the mono speech data through a plurality of speakers.
